# EUROPÄISCHE PATENTSCHRIFT

(11) **EP 2 404 648 B1**
(45) Veröffentlichungstag und Bekanntmachung des Hinweises auf die Patenterteilung: **04.12.2013**
(21) Anmeldenummer: 11003955.9
(22) Anmeldetag: 13.05.2011
(51) Int. Cl.: B01D 35/02, B01D 35/30, B01D 29/33

(54) **Hydraulikanlage mit Leitungsfilter**
Hydraulic assembly with line filter
Installation hydraulique avec filtre de conduite

(30) Priorität: 08.07.2010 DE 202010009933 U
(43) Veröffentlichungstag der Anmeldung: 11.01.2012
(73) Patentinhaber: Seebach, Ingo, 34131 Kassel (DE)
(72) Erfinder: Seebach, Ingo, 34131 Kassel (DE)
(74) Vertreter: Walther, Walther & Hinz GbR

(56) Entgegenhaltungen:
- US-A- 4 806 248
- US-A- 5 630 939

## Beschreibung

Die Erfindung betrifft eine Hydraulikanlage mit einem Leitungsfilter, wobei der Leitungsfilter ein Filtergehäuse aufweist, in dem der Filterkörper einsitzt, wobei das Filtergehäuse zu beiden Enden mit der Hydraulikanlage verbindbar ist, wobei das Filtergehäuse ein erstes und ein zweites Gehäuseteil umfasst, wobei der Filterkörper einen zylindrischen Ansatz mit mindestens einer tangential umlaufenden Dichtung aufweist.

Aus der US 5,630,939 A ist eine Filtereinrichtung bekannt, die auf dem Gebiet der Medizin eingesetzt wird. Die Filtereinrichtung ist Bestandteil einer Sauganlage, wobei in dem Filter der Filtereinrichtung menschliches Gewebe oder auch Metalle gesammelt werden sollen.

In einer Hydraulikanlage ist dafür Sorge zu tragen, dass das in der Hydraulikanlage umfließende Hydrauliköl durch einen Filter gereinigt wird. Das heißt, dass an mindestens einer, jedoch meistens an mehreren Stellen in der Hydraulikanlage Filter angeordnet sind, wobei nach einer Variante die Filter in den Leitungen der Hydraulikanlage eingesetzt sind. Derartige Leitungsfilter besitzen ein Filtergehäuse, wobei das Filtergehäuse über Nippel und Muffen, insbesondere mit den Leitungen der Hydraulikanlage lösbar in Verbindung steht.

Aus der US 4,806,284 ist eine Filtereinrichtung einer Hydraulikanlage bekannt, wobei zur Aufnahme des Filters ein Filtergehäuse vorgesehen ist, das zu beiden Enden Kupplungsglieder aufnimmt. Die Kupplungsglieder sind jeweils durch Federspangen mit dem Filtergehäuse verbunden. Abgedichtet werden die Kupplungsglieder gegenüber dem Filtergehäuse durch zwei in Reihe liegende O-Ringe.

Eine Hydraulikanlage mit einem Leitungsfilter der eingangs genannten Art zeichnet sich, wie dies bereits ausgeführt wurde, im Einzelnen dadurch aus, dass das Filtergehäuse ein erstes, männliches und ein zweites, weibliches Gehäuseteil umfasst, wobei das männliche Gehäuseteil durch das weibliche Gehäuseteil aufgenommen wird. Hierbei sitzt nach dem Stand der Technik in dem weiblichen Gehäuseteil der Filterkörper ein, wobei der Filterkörper einen zylindrischen Ansatz aufweist der mindestens eine umlaufende Dichtung, beispielsweise in Form eines O-Ringes, besitzt. Diese O-Ring-Dichtung liegt an der Innenwandung des weiblichen Gehäuseteils an. Eine weitere Dichtung ist erforderlich, um auch das männliche Gehäuseteil gegenüber dem weiblichen Gehäuseteil abzudichten. In diesem Zusammenhang ist im Einzelnen aus dem Stand der Technik bekannt, dass das männliche Gehäuseteil auf seiner Außenwand ebenfalls über eine O-Ring-Dichtung verfügt, die an der Innenwandung des zylindrischen Ansatzes des Filterkörpers anliegt. Hieraus wird deutlich, dass der Filterkörper zum einen gegenüber dem einen weiblichen Gehäuseteil abgedichtet ist und zum anderen das männliche Gehäuseteil eine Dichtung aufweist, wobei diese Dichtung auf der Innenseite des zylindrischen Ansatzes des Filterkörpers im zusammengebauten Zustand des Leitungsfilters anliegt.

Unzweifelhaft notwendig ist, dass aufgrund der hohen Drücke in einer Hydraulikanlage sämtliche Dichtflächen zumindest durch eine Dichtung gegenüber der Umgebung abgedichtet werden müssen. Nachteilig an dem bekannten Leitungsfilter ist allerdings, dass dieser in dem einen, weiblichen Gehäuseteil derart tief einsitzt, dass er nach Abnahme des männlichen Gehäuseteils von außen nicht erfassbar ist. Obwohl das männliche Gehäuseteil durch eine O-Ring-Dichtung auf der Innenseite des zylindrischen Ansatzes mit dem zylindrischen Ansatz in Verbindung steht, ist es häufig so, dass nach Herausziehen des männlichen Gehäuseteils der Filterkörper im weiblichen Gehäuseteil verbleibt. Es muss dann irgendwie versucht werden, den Filterkörper aus dem weiblichen Gehäuseteil herauszuholen, um diesen auszutauschen oder gegebenenfalls auch nur zu reinigen. Dies ist umständlich.

Die der Erfindung zugrunde liegende Aufgabe besteht demzufolge darin, hier Abhilfe zu schaffen. Insbesondere liegt der Erfindung die Aufgabe zugrunde, die Entnahme des Filterkörpers aus dem Filtergehäuse zu erleichtern.

Zur Lösung der Aufgabe wird erfindungsgemäß vorgeschlagen, dass der zylindrische Ansatz des Filterkörpers mindestens eine weitere tangential umlaufende Dichtung aufweist, wobei die eine umlaufende Dichtung an dem einen ersten Gehäuseteil und die andere umlaufende Dichtung an dem anderen zweiten Gehäuseteil anliegt, wobei die andere Dichtung außerhalb des einen ersten Gehäuseteils liegt. Hieraus wird Folgendes deutlich:
Auf dem zylindrischen Ansatz des Filterkörpers befinden sich zwei beabstandet zueinander angeordnete O-Ring-Dichtungen, wobei eine jede dieser O-Ring-Dichtungen in einer Nut auf der Außenseite des zylindrischen Ansatzes des Filterkörpers einliegt. Die eine dieser Dichtungen dichtet nunmehr gegenüber dem einen ersten Gehäuseteil ab, wohingegen die andere dieser Dichtungen gegenüber dem anderen, zweiten Gehäuseteil abdichtet. Im Einzelnen ist in diesem Zusammenhang vorgesehen, dass die eine untere Dichtung auf dem zylindrischen Ansatz des Filterkörpers, also die Dichtung, die dem eigentlichen Filter des Filterkörpers am nächsten liegt, gegenüber dem einen ersten Gehäuseteil abdichtet, das den Filterkörper aufnimmt, z. B. das männliche Gehäuseteil, wohingegen die andere Dichtung gegenüber dem anderen zweiten, z. B. weiblichen Gehäuseteil abdichtet, das beispielsweise als Deckel zu dem einen ersten, männlichen Gehäuseteil fungiert. Im Folgenden ist das eine erste Gehäuseteil als männliches Gehäuseteil und das andere zweite Gehäuseteil als weibliches Gehäuseteil bezeichnet. Das heißt, dass im Gegensatz zum Stand der Technik, bei dem das weibliche Gehäuseteil den Filterkörper aufnimmt, nunmehr das männliche Gehäuseteil den Filter aufnimmt, und das weibliche Gehäuseteil als Deckel fungiert. Die Folge hiervon ist, dass dann, wenn das weibliche Gehäuseteil abgenommen wird, der Filterkörper mit einem Teil seines zylindrischen Ansatzes aus dem männlichen Gehäuseteil übersteht, und zwar auch mit der einen umlaufenden Dichtung, die gegenüber dem weiblichen Gehäuseteil abdichtet. Der Vorteil davon, dass der zylindrische Ansatz über das männliche Gehäuseteil übersteht, wenn der weibliche Gehäuseteil abgenommen ist, besteht darin, dass beispielsweise mit einer Zange der Filterkörper erfasst werden kann, und unmittelbar aus dem männlichen Gehäuseteil entnommen werden kann. Das heißt weiterhin, dass der Filterkörper bei der erfindungsgemäßen Ausführungsform des Leitungsfilters nach Abnahme des einen im vorliegenden Fall des weiblichen Gehäuseteils, sichtbar ist. Beim Stand der Technik ist es so, dass der Filterkörper vollständig im weiblichen Gehäuseteil einsitzt, und von außen unmittelbar nicht zugänglich ist.

Weitere vorteilhafte Merkmale ergeben sich aus den Unteransprüchen.

So ist vorgesehen, dass die beiden Gehäuseteile jeweils einen äußeren Bund aufweisen, wobei die beiden Bunde durch eine Sicherungsklammer zusammengehalten werden, die auf die Bunde aufclipsbar ist. Die Sicherungsklammer erfasst form- und kraftschlüssig den jeweiligen Bund der beiden zu verbindenden Gehäuseteile. Zur Sicherung der Sicherungsklammer ist eine Art "Rändelmutter" vorgesehen, die auf einem auf dem einen Gehäuseteil angeordneten Gewinde verdrehbar gelagert ist, wobei die Rändelmutter so weit in Richtung der Sicherungsklammer auf dem Gehäuseteil verdrehbar ist, bis durch die Rändelmutter die Sicherungsklammer selbst gesichert ist. Dies geschieht im Einzelnen dadurch, dass die Rändelmutter die Sicherungsklammer zumindest partiell überdeckt.

In Bezug auf die Sicherung der beiden Gehäuseteile untereinander ist im Einzelnen vorgesehen, dass der Bund des einen Gehäuseteils an dem des anderen Gehäuseteils im Wesentlichen spielfrei anliegt. Hierdurch wird bereits mit hoher Sicherheit gewährleistet, dass sich die Sicherungsklammer nicht unbeabsichtigt, etwa aufgrund der eigenen Elastizität des jeweiligen Bundes zu lösen vermag. Darüber hinaus ist vorgesehen, dass die Sicherungsklammer einen umlaufenden Steg aufweist, der nach innen abgewinkelt ist, wobei der jeweilige Bund ebenfalls einen entsprechenden Hinterschnitt aufweist, sodass zwischen dem Steg der Sicherungsklammer einerseits und dem Bund andererseits eine quasi formschlüssige Verbindung besteht.

Anhand der Zeichnungen wird die Erfindung nachstehend beispielhaft näher erläutert.

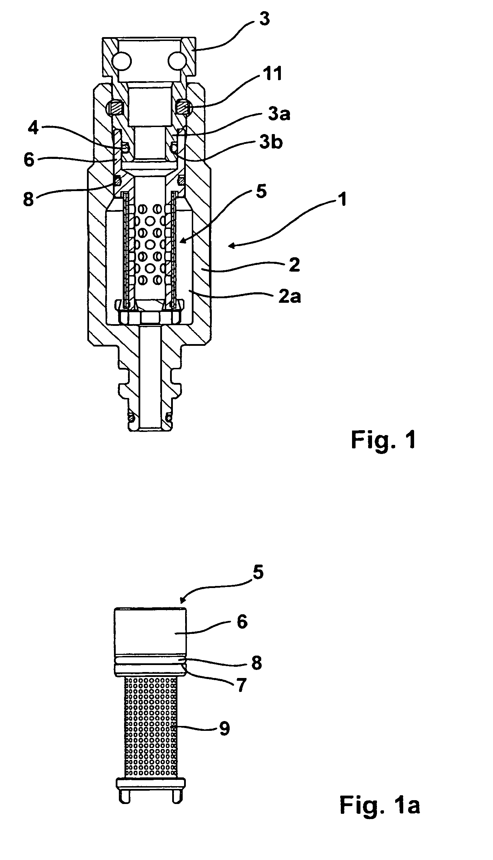

- Fig. 1: zeigt schematisch den Stand der Technik;
- Fig. 1 a: zeigt den Filterkörper gemäß dem Stand der Technik;
- Fig. 2: zeigt den Leitungsfilter nach der Erfindung;
- Fig. 2a: zeigt den Filterkörper nach der Erfindung.

Beim Stand der Technik (Fig. 1, 1a) zeigt der Leitungsfilter 1 ein weibliches Gehäuseteil 2 und das von dem weiblichen Gehäuseteil aufgenommene männliche Gehäuseteil 3. In dem weiblichen Gehäuseteil 2 befindet sich der Filterkörper 5 (Fig. 1a). Der Filterkörper 5 besitzt einen zylindrischen Ansatz 6, wobei der zylindrische Ansatz über eine Nut 7 für den darin einsitzenden O-Ring 8 verfügt. Der Filterkörper 5 sitzt nunmehr in dem weiblichen Gehäuseteil 2 ein, wie sich dies aus Fig. 1 ergibt, wobei zwischen dem eigentlichen Filter 9 und der Innenwandung des weiblichen Gehäuseteils 2 ein Strömungsraum 2a vorgesehen ist. Das männliche Gehäuseteil 3 weist einen umlaufenden Steg 3a auf, wobei der Steg 3a über eine Nut 3b zur Aufnahme des O-Rings 4 dient. Der O-Ring 4 liegt an der Innenseite des zylindrischen Ansatzes 6 des Filterkörpers an. Die Sicherung des männlichen Gehäuseteils 3 in dem weiblichen Gehäuseteil 2 erfolgt durch eine Sicherungsspange 11. Wird nun das männliche Gehäuseteil herausgezogen, dann ist die Verbindung über den O-Ring 4 zu dem Filterkörper 5 nicht so intensiv, dass der Filterkörper mit aus dem weiblichen Gehäuseteil 2 herausgezogen werden würde. Vielmehr ist es so, dass durch den umlaufenden O-Ring 8 der Filterkörper 5 das Bestreben hat, in dem weiblichen Gehäuseteil 2 zu verbleiben. Durch gesondertes Werkzeug muss dann versucht werden, den Filterkörper 5 aus dem weiblichen Gehäuseteil zu entfernen, entweder zum Zwecke des Austausches oder zum Zwecke des Säuberns.

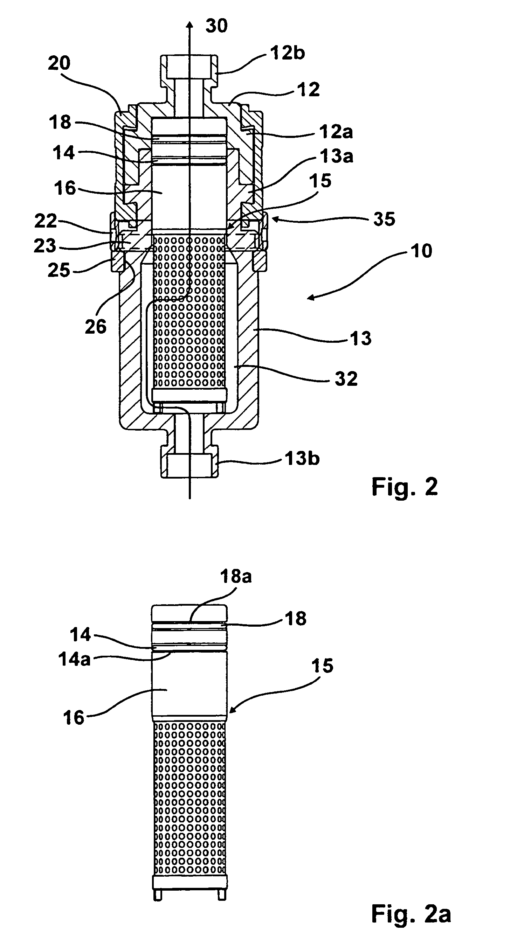

Betrachtet man nunmehr die Fig. 2 und die Fig. 2a mit dem Leitungsfilter 10 und den beiden Gehäuseteilen 12, 13, so ist insbesondere bei Betrachtung der Fig. 2a erkennbar, dass der dort mit 15 bezeichnete Filterkörper über einen hohlen zylindrischen Ansatz 16 verfügt, wobei auf diesen zylindrischen Ansatz auf der Außenfläche zwei beabstandet zueinander angeordnete O-Ringe 14 und 18 vorgesehen sind. Betrachtet man nunmehr die Fig. 2, die den Leitungsfilter im zusammengebauten Zustand darstellt, so ist es nunmehr so, dass das männliche Gehäuseteil 13 den Filterkörper 15 über seine wesentliche Länge aufnimmt. Mit der Dichtung 14 in Form eines umlaufenden O-Ringes, der in einer entsprechenden Nut 14a des zylindrischen Ansatzes einsitzt, wird gegenüber dem männlichen Gehäuseteil 13 abgedichtet. Der weibliche Gehäuseteil 12 ist nach Art eines Deckels ausgebildet, wobei an der Innenmantelfläche des weiblichen Gehäuseteils 12 die Dichtung 18 in Form eines umlaufenden O-Ringes anliegt. Auch dieser O-Ring 18 sitzt in einer Nut 18a ein.

Wird nun das weibliche Gehäuseteil 12 abgenommen, dann steht der Filterkörper 15 über die offene Stirnseite des männlichen Gehäuseteils über. Das heißt, der Filterkörper 15 ist insoweit beispielsweise durch eine Zange erfassbar und kann aus dem männlichen Gehäuseteil 13 herausgezogen werden. Zur Fixierung des weiblichen Gehäuseteils 12 auf den männlichen Gehäuseteil 13 ist eine Sicherungsklammer 20 vorgesehen. Sowohl das männliche Gehäuseteil 13 als auch das weibliche Gehäuseteil 12 besitzen einen Bund 12a, 13a, die durch die Sicherungsklammer 20 erfasst werden, wie sich dies in Anschauung von Fig. 2 ergibt. Die Klammer 20 ist hierbei hülsenförmig und radial federnd ausgebildet und ist auf den Bund 12a, 13a des jeweiligen Gehäuseteils aufclipsbar. Zur Sicherung der Sicherungsklammer auf dem Leitungsfilter ist eine Rändelmutter 22 vorgesehen, wobei die Mutter 22 auf einem Außengewinde 23 des männlichen Gehäuseteils 13 verdrehbar gelagert ist. Im durch die Sicherungsklammer 20 fixierten Zustand wird durch die Mutter 22 die Sicherungsklammer 20 zumindest teilweise überdeckt (Pfeil 35), wie sich dies unmittelbar in Anschauung von Fig. 2 ergibt. Zur Sicherung der Mutter 22 ist eine Sicherungsspange 25 vorgesehen, die in einer Nut 26 auf dem Umfang des männlichen Gehäuseteils aufsteckbar ist. Die Spange 26 ist hierbei aus einem hochbiegsamen Kunststoff ausgebildet.

Sowohl das weibliche Gehäuseteil 12 als auch das männliche Gehäuseteil 13 sind endseitig mit einem Nippel 12b, 13b versehen, um den Leitungsfilter beispielsweise in einer Hydraulikleitung einer Hydraulikanlage einzusetzen. Die Flüssigkeit, z. B. das Hydrauliköl, durchströmt den Leitungsfilter wie in Fig. 2 durch den Pfeil 30 gekennzeichnet. Hierbei ist zwischen dem Filterkörper 15 und der Innenwandung des männlichen Gehäuseteils 13 ein Strömungsraum 32 vorgesehen.

Wesentlich gegenüber dem Stand der Technik ist nun, dass der Filterkörper 15 einen Ansatz 16 aufweist, wobei der Ansatz 16 zwei umlaufende Dichtungen 14 und 18 besitzt. Die eine Dichtung dichtet hierbei unmittelbar gegenüber der Innenwandung des männlichen Gehäuseteils 13 ab, wobei die andere Dichtung 18 gegenüber dem weiblichen Gehäuseteil abdichtet, wobei das weibliche Gehäuseteil als Deckel fungiert. Hierdurch wird es möglich, dass nach Abnahme des weiblichen Gehäuseteils 12 der Filterkörper mit seinem Ansatz 16 sichtbar wird, um ihn dann, beispielsweise mittels einer Zange, aus dem männlichen Gehäuseteil 13 herausziehen zu können.

## Patentansprüche

1. Hydraulikanlage mit einem Leitungsfilter, wobei der Leitungsfilter (10) ein Filtergehäuse (12, 13) aufweist, in dem der Filterkörper (15) einsitzt, wobei das Filtergehäuse (12, 13) zu beiden Enden mit der Hydraulikanlage verbindbar ist, wobei das Filtergehäuse (12, 13) ein erstes und ein zweites Gehäuseteil umfasst, wobei der Filterkörper (15) einen zylindrischen Ansatz (16) mit mindestens einer tangential umlaufenden Dichtung (14) aufweist,
**dadurch gekennzeichnet,**
**dass** der zylindrische Ansatz (16) mindestens eine weitere tangential umlaufende Dichtung (18) aufweist, wobei die eine umlaufende Dichtung (14) an dem einen ersten Gehäuseteil (13) und die andere Dichtung (18) an dem anderen, zweiten Gehäuseteil (12) anliegt, wobei die andere Dichtung (18) außerhalb des einen ersten Gehäuseteils (13) liegt.

2. Hydraulikanlage nach Anspruch 1,
**dadurch gekennzeichnet,**
**dass** die beiden Gehäuseteile (12, 13) jeweils einen Bund (12a, 13a) aufweisen, die durch eine Sicherungsklammer (20) zusammengehalten werden.

3. Hydraulikanlage nach Anspruch 2,
**dadurch gekennzeichnet,**
**dass** der Bund (12a) des einen Gehäuseteils (12) an dem Bund (13a) des anderen Gehäuseteils (13) anliegt.

4. Hydraulikanlage nach Anspruch 2 oder 3,
**dadurch gekennzeichnet,**
**dass** die Sicherungsklammer (20) auf dem Filtergehäuse (12, 13) gesichert ist.

5. Hydraulikanlage nach einem der voranstehenden Ansprüche 2 bis 4,
**dadurch gekennzeichnet,**
**dass** die Sicherung der Sicherungsklammer (20) durch eine auf dem Außenmantel des Filtergehäuses (12, 13) aufdrehbare Mutter (22) erfolgt, wobei die Mutter (22) die Sicherungsklammer (20) partiell überdeckt.

6. Hydraulikanlage nach Anspruch 5,
**dadurch gekennzeichnet,**
**dass** die Mutter (22) durch eine das eine erste Gehäuseteil (13) erfassende Spange (25) gegen unbeabsichtigtes Lösen gesichert ist.

7. Hydraulikanlage nach Anspruch 6,
**dadurch gekennzeichnet,**
**dass** die Spange (25) in eine Nut (26) auf der Außenmantelfläche des einen ersten Gehäuseteils (13) einclipsbar ist, wobei die Spange (25) seitlich an der Mutter (22) anliegt.

## Claims

1. A hydraulic system with a line filter, wherein the line filter (10) has a filter casing (12, 13) in which the filter body (15) is inserted, wherein the filter casing (12, 13) is connectable at both ends to the hydraulic system, wherein the filter casing (12, 13) comprises a first and a second casing part, wherein the filter body (15) comprises a cylindrical stud (16) with at least one tangentially circumferential seal (15),
**characterized in that**
the cylindrical stud (16) comprises at least one other tangentially circumferential seal (18), wherein the one circumferential seal (14) rests on the one first casing part (13) and the other seal (18) rests on the other second casing part (12), wherein the other seal (18) lies outside of the first casing part (13).

2. The hydraulic system according to claim 1,
**characterized in that**
the two casing parts (12, 13) comprise respectively one flange (12a, 13a), which are held together by a securing clamp (20).

3. The hydraulic system according to claim 2,
**characterized in that**
the flange (12a) of the one casing part (12) rests on the flange (13a) of the other casing part (13).

4. The hydraulic system according to claim 2 or 3,
**characterized in that** the securing clamp (20) is secured on the filter casing (12, 13).

5. The hydraulic system according to one of the afore-mentioned claims 2 to 4,
**characterized in that**
securing the securing clamp (20) occurs by way of a nut (22) that is screwable onto the outer sheath of the filter casing (12, 13), wherein the nut (22) partially covers the securing clamp (20).

6. The hydraulic system according to claim 5,
**characterized in that**
the nut (22) is secured against unwanted loosening by a clasp (25) gripping the first casing part (13).

7. The hydraulic system according to claim 6,
**characterized in that**
the clasp (25) is clippable into the nut (26) on the outer sheath surface of the first casing part (13), wherein the clasp (25) rests laterally on the nut (22).

## Revendications

1. Installation hydraulique avec un filtre de tubulure, dans laquelle le filtre de tubulure (10) comporte un boîtier de filtre (12, 13) dans lequel est implanté un corps de filtre (15), dans laquelle le boîtier de filtre (12, 13) peut être connecté aux deux extrémités avec l'installation hydraulique, dans laquelle le boîtier de filtre (12, 13) comprend un premier élément de boîtier et un second élément de boîtier, dans laquelle le corps de filtre (15) présente un prolongement cylindrique (16) avec au moins un joint tangentiel périphérique (14),
**caractérisée en ce que,**
le prolongement cylindrique (16) comporte au moins un autre joint tangentiel périphérique (18), dans laquelle l'un des joints périphérique (14) est en appui contre ledit premier élément de boîtier (13) et l'autre joint périphérique (18) est en appui contre l'autre, second élément de boîtier (12), dans laquelle l'autre joint (18) est disposé en dehors du premier élément de boîtier (13).

2. Installation hydraulique selon la revendication 1,
**caractérisée en ce que,**
les deux éléments de boîtier (12, 13) présentent respectivement un bourrelet (12a, 13a) qui sont maintenus ensemble au moyen d'une pince de sûreté (20).

3. Installation hydraulique selon la revendication 2,
**caractérisée en ce que,**
le bourrelet (12a) de l'un des éléments de boîtier (12) est en appui contre le bourrelet (13a) de l'autre des éléments de boîtier (13).

4. Installation hydraulique selon la revendication 2 ou 3,
**caractérisée en ce que,**
la pince de sûreté (20) est rendue solidaire du boîtier de filtre (12, 13).

5. Installation hydraulique selon l'une des revendications précédentes 2 à 4,
**caractérisée en ce que,**
la fixation de la pince de sûreté (20) est assurée par un écrou (22) vissé sur le manteau extérieur du boîtier de filtre (12, 13), l'écrou (22) recouvrant partiellement la pince de sûreté (20).

6. Installation hydraulique selon la revendication 5,
**caractérisée en ce que,**
l'écrou (22) est sécurisé contre une libération involontaire au moyen d'une agrafe (25) en prise avec ledit premier élément de boîtier (13).

7. Installation hydraulique selon la revendication 6,
**caractérisée en ce que,**
l'agrafe (25) est agencée pour être emboîtée dans une rainure (26) du manteau extérieur du premier élément de boîtier (13), dans laquelle l'agrafe (25) est en appui latéral contre l'écrou (22).
